**Europäisches Patentamt**

**European Patent Office**

**Office européen des brevets**

(19)

(11) Veröffentlichungsnummer: **0 523 717 A1**

## (12) EUROPÄISCHE PATENTANMELDUNG

(21) Anmeldenummer: **92112231.3**

(22) Anmeldetag: **17.07.92**

(51) Int. Cl.⁵: **C08K 3/34**, C08L 23/10

(30) Priorität: **19.07.91 DE 4123965**

(43) Veröffentlichungstag der Anmeldung:
**20.01.93 Patentblatt 93/03**

(84) Benannte Vertragsstaaten:
**AT BE CH DE DK ES FR GB IT LI LU NL PT SE**

(71) Anmelder: **HOECHST AKTIENGESELLSCHAFT**
**Postfach 80 03 20**
**W-6230 Frankfurt am Main 80(DE)**

(72) Erfinder: **Mecklenburg, Thomas, Dr.**
**Fröbelstrasse 7**
**W-6308 Butzbach(DE)**

(54) **Mit Ton verstärkfe Polypropylen-Formmasse.**

(57) Eine Polypropylen-Formmasse, welche als Verstärkungsstoff ein Tonmineral spezieller Zusammensetzung enthält, zeigt gegenüber bekannten mit Talk verstärkten Polypropylen-Formmassen ein verbessertes Eigenschaftsprofil. Die Schlagzähigkeit bei nicht mit Schlagzäh-Modifiern ausgerüsteten Formmassen nimmt beträchtlich zu, während bei mit Schlagzäh-Modifiern ausgerüsteten Formmassen die Festigkeit, insbesondere die Kugeldruckhärte ansteigt. Generell ist gegenüber mit Talk verstärkten Formmassen eine Verbesserung der Kratzfestigkeit und der Oberflächenqualität zu beobachten.

EP 0 523 717 A1

Die Erfindung bezieht sich auf eine mit einem Tonmineral spezieller Zusammensetzung verstärkte Polypropylen-Formmasse, die insbesondere gegenüber talkverstärkten Polypropylen-Formmassen ein deutlich verschobenes, vorteilhaftes Eigenschaftsprofil aufweist.

Verstärkte Polypropylen-Formmassen finden in großem Umfang Anwendung im Automobil sowohl im Innenraum als auch, mit entsprechender Lichtschutzausrüstung, im Außenbereich.

Der für diese Anwendungen überwiegend eingesetzte Verstärkungsstoff in Polypropylen ist Talk, ein natürlich vorkommendes Silikat der Zusammensetzung $Mg_3[Si_4O_{10}](OH)_2$ mit Blattstruktur. Aufgrund des je nach Aufarbeitung (Mahlen, Windsichten oder ähnlichem) des Minerals mehr oder weniger ausgeprägten Aspekt-Verhältnisses zwischen üblicherweise 30:1 und 10:1 bewirkt eine Talkverstärkung eine Steigerung der Biegesteifheit, jedoch eine Abnahme der Zähigkeit mit zunehmendem Talkgehalt in der Polypropylen-Formmasse. Für Anwendungen im Automobil kann die Zähigkeit, insbesondere die Kälteschlagzähigkeit, mit Hilfe von thermoplastischen Elastomeren (z.B. EP(D)M ) stark verbessert werden, wobei eine Abnahme der Biegesteifheitswerte mit zunehmendem Schlagzäh-Modifier-Gehalt in Kauf genommen werden muß.

Verstärkte Polypropylen-Formmassen haben üblicherweise folgende Zusammensetzung :

| Ca. 40 bis 95 | Gewichtsteile Propylen-Homo- oder Propylen/Ethylen-Copolymer, |
|---|---|
| ca. 0 bis 30 | Gewichtsteile thermoplastisches Elastomer, |
| ca. 5 bis 60 | Gewichtsteile Talk, |
| ca. 0,1 bis 2 | Gewichtsteile Antioxidantien, |
| ca. 0,1 bis 2 | Gewichtsteile Lichtschutzausrüstung, |
| ca. 0 bis 10 | Gewichtsteile Farbpigmente und |
| 0 bis 0,5 | Gewichtsteile organisches Peroxid zur Einstellung der gewünschten Schmelzeviskosität. |

Besondere Vorteile mit Talk verstärkter Polypropylen-Formmassen gegenüber ebenfalls für obengenannte Anwendungen im Automobil eingesetzten ABS-Copolymeren und -Polycarbonat-Blends sind:
- die hervorragende Fließfähigkeit der Schmelze, insbesondere von CR-Produkten mit engen Molmassenverteilungen (CR = Controlled Rheology);
- das gute akustische Dämmvermögen (dumpfes Klangbild );
- die matte Oberfläche;
- die gute Wärmeformbeständigkeit unter geringer Belastung;
- die sehr gute Chemikalienbeständigkeit;
- die gute Witterungsbeständigkeit mit entsprechender Lichtschutzausrüstung;
- die gute Recyclisierbarkeit;
- der geringere Preis.

Nachteile talkverstärkter Polypropylen-Formmassen sind dagegen :
- das für manche Anwendungen unzureichende Steifigkeits-Zähigkeits-Verhältnis;
- die geringe Kälte-Schlag- und Kerbschlagzähigkeit bei nichtschlagzäh-modifizierten PP-Formmassen, insbesondere bei Temperaturen unterhalb -10°C:
- die oft unbefriedigende Oberflächenqualität, beeinträchtigt durch Glanzunterschiede (sogenannte Schiebelinien) sowie Fließmarkierungen, insbesondere mit zunehmender Talk-Korngröße, mit zunehmender Schmelzeviskosität bzw. abnehmendem MFI, bei schlagzäh-modifizierten PP-Formmassen und bei dunklen Farbeinstellungen;
- die mangelhafte Kratzfestigkeit, insbesondere bei dunklen Farbeinstellungen und bei schlagzäh-modifizierten PP-Formmassen, aufgrund relativ niedriger Kugeldruckhärte sowie aufgrund spezifischer Eigenschaften von Talk, wie z.B. --- der geringen Mohs'schen Härte ( = 1);
- die verminderte Festigkeit und deutlich sichtbare Aufwölbung im Bereich der Bindenähte.

Talkverstärkte und schlagzäh-modifizierte PP-Formmassen sind in verschiedenen Druckschriften beschrieben (vgl. z.B. DE 27 35 027, EP 069 479, EP 153 415, EP 204 400, EP 426 315). In diesen Druckschriften wird auch Ton als möglicher Füll- und Verstärkungsstoff erwähnt, jedoch nicht näher spezifiziert.

Es wurde gefunden, daß durch Verwendung eines speziellen Tonminerals als Verstärkungsstoff Polypropylen-Formmassen mit verbesserten Eigenschaften erhalten werden.

Die Erfindung betritt: somit eine verstärkte Polypropylen-Formmasse, im wesentlichen bestehend aus

30 bis 95 Gewichtsteilen
eines teilkristallinen isotaktischen Propylen-Homopolymers mit einem isotaktischen Anteil > 80%, mit einem Kristallinitätsgrad > 50 % und einem MFI (230/5) von 0,5 bis 1000 g/10 min,
oder

eines teilkristallinen syndiotaktischen Propylen-Homopolymers mit einem syndiotaktischen Anteil von > 80 %, mit einer syndiotaktischen Sequenzlänge > 10, mit einem Kristallinitätsgrad > 30 % und mit einem MFI (230/5) von 0,5 bis 1000 g/10 min,

oder

eines teilkristallinen Propylen/Ethylen-, Propylen/1-Olefin- oder Propylen/Ethylen/1-Olefin-ter-Blockcopolymers mit $C_4$-$C_8$-1-Olefinen mit einem Ethylen- oder/und oder/und 1-Olefin-Anteil von 2 bis 30 Gew.-% und mit einem MFI (230/5) von 0,5 bis 1000 g/10 min,

oder

eines teilkristallinen statistischen Propylen/Ethylen-, Propylen/1-Olefin- oder Propylen/Ethylen/1-Olefin-ter-Copolymers mit einem Ethylen- oder/und 1-Olefin-Anteil von 0,5 bis 30 Gew.-% und einem MFI (230/5) von 0,5 bis 1000 g/10 min,

0 bis 30 Gewichtsteilen

eines thermoplastischen Ethylen/Propylen- oder/und Ethylen/Propylen/Dien-Kautschuksmit einem Ethylen-Gehalt > 45 Gew.-% und einer Mooney-Viskosität ML (1 + 8) bei 127° C von 20 bis 70,

0 bis 10 Gewichtsteilen

eines unverzweigten Polyethylens mit einer Dichte von 0,94 bis 0,965 g/cm$^3$ und einem Kristallinitätsgrad von 60 bis 80 %,und

5 bis 60 Gewichtsteilen

eines Tonminerals mit einem $SiO_2$-Gehalt von 55 bis 80 Gew.-% und einem $Al_2O_3$-Gehalt von 10 bis 30 Gew.-% und einer Korngröße mindestens 95 % < 20 $\mu$m und einem hohen Feinkornanteil mit mindestens 60 % < 2 $\mu$m.

Die erfindungsgemäße Polypropylen-Formmasse ist gekennzeichnet durch die Verwendung eines natürlich vorkommenden Tonminerals mit spezieller Zusammensetzung als Verstärkungsstoff. Dieses Tonmineral wurde bisher vorwiegend nur in der Keramikindustrie eingesetzt. Bei der Aufarbeitung des relativ grobkörnigen Ton-Minerals fällt ein sogenannter Filterstaub an, der sich durch eine überwiegend sehr geringe Korngöße auszeichnet. Durch Windsichtung wird ein einheitlich feinteiliges Mineralpulver mit beispielsweise einem top cut (mindestens 95 %) < 20 $\mu$m und noch 85 bis 90 % < 6 $\mu$m erhalten. Dieses Mineralpulver kann weiterhin calciniert werden.

Eine Probe des verwendeten nicht calcinierten Ton-Filterstaubes wies laut Silikat-Vollanalyse folgende chemische Zusammensetzung auf :

| | |
|---|---|
| 76 Masse-% | $SiO_2$ |
| 16 Masse-% | $Al_2O_3$ |
| 4 Masse-% | $K_2O$ |
| 1,5 Masse-% | $Fe_2O_3$ |
| 0,5 Masse-% | MgO |
| 0,7 Masse-% | $TiO_2$ |
| 1,3 Masse-% | Spurenelemente |
| 5,0 Masse-% | Glühverlust. |

Dies entspricht einer mineralogischen Zusammensetzung von

| | |
|---|---|
| ca. 45 Masse-% | Muskovit (Glimmer) |
| ca. 39 Masse-% | Quarz |
| ca. 14 Masse-% | Kaolinit |
| ca. 2 Masse-% | Nebenbestandteile. |

Die chemische und mineralogische Zusammensetzung unterscheidet sich damit erheblich von der des in bekannten Formmassen genannten Tonminerals Kaolin, dessen Hauptkomponente Kaolinit $Al_2[Si_2O_5]$-$(OH)_4$ ein ähnliches $Al_2O_3$ : $SiO_2$-Verhältnis wie Tonerde aufweist : 46 % $Al_2O_3$ + 54 % $SiO_2$. Ein weiteres Kennzeichen des verwendeten Tonminerals ist die relativ hohe Mohs'sche Härte von 3 - 3,5 gegenüber dem Wert 1 für Talk.

Die erfindungsgemäße Polypropylen-Formmasse epthält mindestens eines der folgenden Polymeren:

1a) Ein teilkristallines isotaktisches Propylen-Homopolymer mit einem isotaktischen Anteil > 80 % , mit einem Kristallisationsgrad > 50 % und einem MFI (230/5) im Bereich von 0,5 bis 1000 g/10 min oder

1b) ein teilkristallines syndiotaktisches Propylen-Homopolymer mit einem syndiotaktischen Anteil > 80 %, mit einer syndiotaktischen Sequenzlänge > 10, mit einem Kristallisationsgrad > 30 % und mit einem MFI (230/5) im Bereich von 0,5 bis 1000 g/10 min oder

1c) ein teilkristallines Propylen/Ethylen-, Propylen/1-Olefin- oder Propylen/Ethylen/1-Olefin-ter-Block-Copolymer mit 1-Olefinen $C_nH_{2n}$ (n = 4 - 8) mit einem Ethylen- oder/und 1-Olefin-Anteil von 2 - 30 Gew.% und mit einem MFI (230/5) im Bereich von 0,5 bis 1000 g/10 min oder

1d) ein teilkristallines statistisches Propylen/Ethylen-, Propylen/1-Olefin- oder Propylen/Ethylen/1-Olefin-ter-Copolymer mit einem Ethylen- oder/und 1-Olefin-Gehalt von 0,5 bis 30 Gew.% und mit einem MFI (230/5) im Bereich von 0,5 bis 1000 g/10 min;

2) ein thermoplastischer Ethylen/Propylen- (EPM) oder/und Ethylen/Propylen/Dien-Kautschuk (EPDM) mit einem Ethylen-Gehaft von > 45 Gew.%, ohne Den bis hin zu sehr hohem Dien-Gehalten und mit einer Mooney-Viskosität ML (1 + 8) bei 127°C im Bereich von 20 bis 70;

3) gegebenenfalls ein unverzweigtes HD-Polyethylen mit einer Dichte von 0,94 bis 0,965 g/cm³ und einem Kristallisationsgrad von 60 - 80 %.

Weiterhin enthält die erfindungsgemäße Formmasse

4) ein Tonmineral mit einem $SiO_2$-Gehalt von 65± 10 Gew.%, vorzugsweise 63 bis 66 Gew.-%, und einem $Al_2O_3$-Gehalt von 20 ± 10 Gew.%, vorzugsweise 19 bis 22 Gew.%, sowie einer Korngröße/top cut < 20 $\mu$m als Füll- und Verstärkungsstoff.

Daneben kann die erfindungsgemäße Polypropylen-Formmasse noch die folgenden Bestandteile enthalten:

5) Oxidationsstabilisatoren, wie beispielsweise sterisch gehinderte Phenole, Thioether, Phosphite und Phosponite;

6) eine Lichtschutzausrüstung für Innen- und/oder Außenanwendungen mit UV-Absorber und/oder HALS (= hindered amine light stabilizers);

7) Verarbeitungshilfsmittel wie Gleitmittel/Säurefänger und Antistatika;

8) Antistatika;

9) Farbpigmente.

Die Schmelzeviskosität und die Verarbeitungseigenschaften der Formmasse können durch chemischen Abbau mittels organischer Peroxide eingestellt werden. Geeignete Peroxide sind 2,5-Dimethyl-2,5-bis-(tert.butyloxy )-hexan, Di-t-butylperoxid und andere.

Die genannten Komponenten 1) bis 9) sind in der erfindungsgemäßen Polypropylen-Formmasse in folgenden Mengen enthalten :

| 1) | 30 bis 95, vorzugsweise | 50 bis 90 Gewichtsteile, |
|---|---|---|
| 2) | 0 bis 30, vorzugsweise | 5 bis 20 Gewichtsteile, |
| 3) | 0 bis 10, vorzugsweise | 1 bis 3 Gewichtsteile, |
| 4) | 5 bis 60, vorzugsweise | 10 bis 40 Gewichtsteile, |
| 5) | 0,1 bis 2, vorzugsweise | 0,1 bis 1,0 Gewichtsteile, |
| 6) | 0,1 bis 3, vorzugsweise | 0,2 bis 0,5 Gewichtsteile, |
| 7) | 0,1 bis 3, vorzugsweise | 0,1 bis 1,5 Gewichtsteile, und |
| 8) | 0 bis 10, vorzugsweise | 0,2 bis 2 Gewichtsteile. |

Die Compoundierung der Einzelkomponenten erfolgt mit Hilfe üblicher Ein- oder Zweischnecken-Compounder, insbesondere mit Zweischnecken-Extrudern. Die Masse-Temperaturen im Extruder liegen in der Regel im Bereich von 180 bis 270°C.

Die resultierenden Stränge werden mit Hilfe eines Granulators zu einem Stranggranulat mit einer durchschnittlichen Länge von 2 bis 5 mm geschnitten.

Die Verarbeitung der Granulate zu Spritzgußteilen, beispielsweise zu Prüfkörpern entsprechend den ISO- und DIN-Normen zur Prüfung der mechanischen, thermischen und elektrischen Eigenschaften der Polypropylen-Formmasse erfolgt mit Hilfe üblicher Schnecken-Kolben-Spritzgießmaschinen. Die Massetemperaturen in der Spritzgußmaschine liegen üblicherweise im Bereich von 180 bis 300°C, die Fließfrontgeschwindigkeiten zwischen 50 und 500 mm/sec.

Die Ermittlung der Eigenschaften der Polypropylen-Formmasse an den Prüfkörpern erfolgt entsprechend folgenden ISO- und DIN-Normen :

- Zugversuche entsprechend DIN 53 455,
- Zug-E-Modul entsprechend DIN 53 457,
- Biegeversuche entsprechend DIN 53 452,
- Biege-Modul entsprechend ISO R 178,

- Charpy-Schlagzähigkeit entsprechend ISO R 179/1eU,
- Charpy-Kerbschlagzähigkeit entsprechend ISO R 179/1eA,
- Kugeldruckhärte entsprechend DIN 53 456,
- HDT A entsprechend ISO R 75,
- MFI entsprechend DIN 53 735 u.a.

Gegenüber einer Talk-Verstärkung hat die Tonmineral-Verstärkung bei Polypropylen-Formmassen eine charakteristische Verschiebung des Eigenschaftsprofils zur Folge. Überraschend ist insbesondere der sehr unterschiedliche Einfluß der Tonmineral-Verstärkung auf das Festigkeits-Zähigkeits-Verhältnis bei schlagzähen EP(D)M-modifizierten und nicht schlagzäh modifizierten PP-Formmassen im Vergleich zu talkverstärkten PP-Formmassen :

- Bei nicht schlagzäh modifizierten Polypropylen-Formmassen mit einem Ton-Gehalt von z.B. 20 Gew.% liegen die Schlagzähigkeiten bei Temperaturen oberhalb -10°C, insbesondere oberhalb der Glastemperatur von PP um je nach Meßmethode bis zu 40 % über den Werten entsprechender talkverstärkter Formmassen. Die Verbesserung der Kerbschlagzähigkeiten bei Temperaturen > - 10°C ist weniger ausgeprägt. Eine Verbesserung der Kälte-Schlag- und Kerbschlagzähigkeit bei Temperaturen < 0°C ist dagegen nicht zu beobachten. Die Festigkeitswerte (Zug- und Biegeversuch) der tonmineralverstärkten Polypropylen-Formmassen sind geringfügig, die E-Moduln um bis zu 15 % reduziert.
- Bei schlagzäh modifizierten tonmineralverstärkten Polypropylen-Formmassen, beispielsweise mit einem EP(D)M-Gehalt von 10 Gew.%, liegt dagegen die Schlagzähigkeit bei einer Temperatur > 10°C um bis zu 15 % und die Kerbschlagzähigkeit um bis zu 30 % unter den Werten der entsprechenden talkverstärkten Polypropylen-Formmassen. Keine Unterschiede sind dagegen bei der Kälte-Schlag- und Kerbschlagzähigkeit zu beobachten. Die Festigkeit tonmineralverstärkter, schlagzäh modifizierter Polypropylen-Formmassen liegt geringfügig, die Kugeldruckhärte erheblich (bis zu 15%) über den Werten talkverstärkter Polypropylen-Formmassen.

Generell ist bei allen tonmineralverstärkten Polypropylen-Formmassen gegenüber talkverstärkten Polypropylen-Formmassen eine verbesserte Kratzfestigkeit und eine verbesserte Oberflächenqualität zu beobachten. Insbesondere die bei schlagzäh modifizierten talkverstärkten Formmassen häufig auftretenden Schiebelinien sind nur noch in sehr geringem Maße sichtbar.

Die nachfolgenden Beispiele sollen die Erfindung verdeutlichen.


Vergleichsbeispiel A


In einem Fluid-Mischer wurden gemischt :

| | |
|---|---|
| 78,0 Gew.teile | eines teilkristallinen isotaktischen Propylen-Homopolymers mit einem isotaktischen Anteil > 90 %, mit einem Kristallisationsgrad von ca. 65 % und einem MFI (230/5) von 7 - 9 g/10 min; |
| 2,0 Gew.teile | eines Talks mit einer relativ breiten Korngrößen-Verteilung : cut(80%) < 20 $\mu$m, cut(50%) < 10 $\mu$m; |
| 0,3 Gew.teile | Octadecyl-3-(3,5-di-tert.butyl-4-hydroxyphenyl)-propionat; |
| 0,3 Gew.teile | Di-octadecyl-sulfid; |
| 0,4 Gew.teile | Calciumstearat und Bis-stearoyl/palmitoyl-ethylendiamin im Verhältnis 3 : 1, |
| 0,7 Gew.teile | Acetogenruß. |


Die Compoundierung der Pulvermischung und anschließende Granulierung erfolgte mit Hilfe eines Zweischneckenextruders W&P-ZSK 53 bei einer maximalen Zylindertemperatur von 230°C und maximaler Masse-Temperatur von 250°C.

Das erhaltene Granulat wurde mit Hilfe einer Schnecken-Kolben-SpritzgießmaschineKM 90-210 B bei einer Masse-Temperatur von maximal 240°C zu DIN- und ISO-Prüfkörpern verarbeitet.

Es wurden die obengenannten DIN- und ISO-Prüfungen durchgeführt.


Beispiel 1


Das Vorgehen von Vergleichsbeispiel A wurde wiederholt, mit Ausnahme des Verstärkungsstoffs, der durch 22,0 Gew.teile Ton (65,4 % $SiO_2$, 20,3 % $Al_2O_3$) mit einer geringen Korngröße - cut (mindestens 95

%) < 20 $\mu$m, cut (85 bis 90 %) < 6 $\mu$m - ersetzt wurde.

Vergleichsbeispiel B

In einem Fluid-Mischer wurden gemischt :

| 70,0 Gew.teile | eines Propylen-Ethylen-Block-Copolymers mit einem isotaktischen Anteil von ca. 80 %, einem ataktischen Anteil von ca. 5 % und einem Ethylengehalt von ca. 7,5 % sowie mit einem MFI (230/5) von 20 - 30 g/10 min; |
| 20,0 Gew.teile | eines Talks mit einer relativ geringen Korngröße : top cut (99%) < 20 $\mu$m, cut (86%) < 10 $\mu$m; |
| 10,0 Gew.teile | eines handelsüblichen Schlagzäh-Modifiers, bestehend aus : 60 Gew.% eines EPM-Kautschuks mit einem Ethylen-gehalt von ca. 48 %, 30 Gew.% Ethylen-Propylen-Block-Copolymer und 10 Gew.% HDPE; |
| 0,2 Gew.teile | Pentaerythrityl-tetrakis[3-(3,5-di-t-butyl-4-hydroxiphenyl)-propionat]; |
| 0,3 Gew.teile | Calciumstearat und Bis-stearoyl/palmitoyl-ethylendiamin entsprechend Vergleichsbeispiel A; |
| 0,3 Gew.teile | eines Lichtschutzmittels ( UV-Absorber); |
| 2,0 Gew.teile | Farbpigment (Ultramarinblau und Acetogenruß) |

Die Compoundierung und Verarbeitung zu Spritzgußteilen oder Prüfkörpern erfolgte entsprechend Vergleichsbeispiel A.

Vergleichsbeispiel C

Das Vorgehen vom Vergleichsbeispiel B wurde wiederholt mit der Ausnahme, daß der Säurefänger Ca-stearat durch 0,2 Gew.teile MgO ersetzt wurde.

Beispiel 2

Das Vorgehen vom Vergleichsbeispiel C wurde wiederholt mit der Ausnahme, daß der Verstärkungsstoff durch 20 Gew.teile Tonmineral entsprechend Beispiel 1 ersetzt wurde.

Vergleichbespiel D

In einem Fluid-Mischer wurden gemischt:

| 80,0 Gew.teile | eines Propylen-Ethylen-Block-Copolymer mit einem isotaktischen Anteil von ca. 80 %, einem ataktischen Anteil von ca. 5 % und einem Ethylengehalt von ca. 10 % sowie einem MFI (230/5) von 20-30 g/10 min; |
| 20,0 Gew.teile | eines Talks mit einer relativ geringen Korngröße (entsprechend Vergleichsbeispiel B); |
| 0,5 Gew.teile | einer Kombination aus einem handelsüblichen phenolischen und einem phosphitischen Oxidationsstabilisator; |
| 0,3 Gew.teile | einer Kombination aus Ca-Stearat und einem handelsüblichen Wachs (entsprechend Vergleichsbeispiel B); |
| 0,3 Gew.teile | eines Lichtschutzmittels; |
| 0,98 Gew.teile | Farbpigmente zur Erzeugung einer speziellen Schwarzfarbe. |

Beispiel 3

Das Vorgehen von Vergleichsbeispiel D wurde wiederholt mit der Ausnahme, daß der Verstärkungsstoff durch 20 Gew.teile Tonmineral entsprechend Beispiel 1 ersetzt wurde.

Tabelle 1

| Eigenschaften | Einheit | Vgl.A Talk | Beispiel 1 Ton |
|---|---|---|---|
| Glührückstand (1h,625°C) | % | 20,2 | 21,0 |
| Schmelzindex | | | |
| MFI 230/5 | g/10 min | 10,0 | 9,8 |
| MVI 230/5 | g/10 min | 12,6 | 10,8 |
| Dichte | g/cm³ | 1,058 | 1,063 |
| Kugeldruckhärte 30 s | N/mm² | 80 | 85 |
| 10 s | N/mm² | 85 | 91 |
| Streckspannung | N/mm² | 34 | 33,5 |
| Streckdehnung | % | 6 | 6,2 |
| Spannung bei Bruch | N/mm² | - | - |
| Dehnung bei Bruch | % | - | - |
| Spannung bei 50% | N/mm² | 10 | 17 |
| Zug-E-Modul (Sekante) | N/mm² | 2800 | 2500 |
| 3,5%-Biegespannung | N/mm² | 44 | 44 |
| Max. Biegespannung | N/mm² | 50 | 49 |
| Max. Randfaserdehng | % | 6,1 | 6,0 |
| Biege-E-Modul (Tangente) | N/mm² | 2700 | 2500 |
| Schlagzähigkeit +23° | mJ/mm² | 46 | 55 |
| (Charpy) -20° | mJ/mm² | 18 | 18 |
| Kerbschlagzähigkeit | | | |
| (Charpy) +23° | mJ/mm² | 4 | 4 |
| -20° | mJ/mm² | 2 | |
| HDT - A °C | | 70 | 64 |
| WAB (150°C) | h | 800 | 450 |

Tabelle 2

| Eigenschaften | Einheit | Vgl.B Talk | Vgl.C Talk | Beispiel 2 TON |
|---|---|---|---|---|
| Glührückstand (1h,625°C) | % | 19,5 | 20,8 | 20,6 |
| Schmelzindex | | | | |
| MFI 230/5 | g/10 min | 18,1 | 21,8 | 19,6 |
| MVI 230/5 | g/10 min | 20,1 | 24,6 | 21,9 |
| Dichte | g/cm$^3$ | 1,023 | 1,041 | 1,041 |
| Kugeldruckhärte 30 s | N/mm$^2$ | 47 | 52 | 60 |
| Streckspannung | N/mm$^2$ | 22 | 22,5 | 24 |
| Streckdehnung | % | 5,6 | 5,5 | 5,0 |
| Spannung bei Bruch | N/mm$^2$ | 9 | 9 | 13,5 |
| Dehnung bei Bruch | % | 49 | 46 | 37 |
| Spannung bei 50% | N/mm$^2$ | 15 | 16 | - |
| Zug-E-Modul (Sekante) | N/mm$^2$ | 1680 | 1660 | 1670 |
| 3,5%-Biegespannung | N/mm$^2$ | 26 | 27 | 28 |
| Max.Biegespannung | N/mm$^2$ | 26 | 27,5 | 29 |
| Max.Randfaserdehng | % | 3,6 | 3,9 | 4,1 |
| Biege-E-Modul (Tangente) | N/mm$^2$ | 1750 | 1810 | 1630 |
| Schlagzähigkeit (Charpy) +23°C | mJ/mm$^2$ | o.B. | 127 | 110 |
| -20°C | mJ/mm$^2$ | 75 | 37 | 38 |
| Kerbschlagzähigkeit (Charpy) +23°C | mJ/mm$^2$ | 15,3 | 10,3 | 7,3 |
| -20°C | mJ/mm$^2$ | 4,5 | 3 | 3 |
| OIT (200°C) | min | 44 | 31 | 37 |

o.B. = ohne Bruch

Tabelle 3

| Eigenschaften | Einheit | Vgl.D Talk | Beispiel 3 Ton |
|---|---|---|---|
| Glührückstand (1h,625°C) | % | 20 | 21,5 |
| Schmelzindex | | | |
| MFI 230/5 | $cm^3$/10 min | 40 | 37 |
| Dichte | $g/cm^3$ | 1,04 | 1,07 |
| Kugeldruckhärte 30 s | $N/mm^2$ | 65 | 65 |
| Streckspannung | $N/mm^2$ | 28 | 23 |
| Streckdehnung | % | 4 | 4 |
| Reißfestigkeit | $N/mm^2$ | 4 | 15 |
| Reißdehnung | % | 35 | 30 |
| Zug-E-Modul | $N/mm^2$ | 2200 | 1900 |
| Biege-E-Modul | $N/mm^2$ | 2100 | 1800 |
| Schlagzähigkeit (Charpy) +23° | $N/mm^2$ | 105 | 150 |
| -20° | $N/mm^2$ | 40 | 55 |
| Kerbschlagzähigkeit (Charpy) +23° | $N/mm^2$ | 6 | 7,5 |
| -20° | $N/mm^2$ | 3 | 3 |
| HDT - A °C | | 70 | 62 | 52 |

**Patentansprüche**

1. Verstärkte Polypropylen-Formmasse, im wesentlichen bestehend aus

   30 bis 95 Gewichtsteilen
   eines teilkristallinen isotaktischen Propylen-Homopolymers mit einem isotaktischen Anteil > 80%, mit einem Kristallinitätsgrad > 50 % und einem MFI (230/5) von 0,5 bis 1000 g/10 min,
   oder
   eines teilkristallinen syndiotaktischen Propylen-Homopolymers mit einem syndiotaktischen Anteil von > 80 %, mit einer syndiotaktischen Sequenzlänge > 10, mit einem Kristallinitätsgrad > 30 % und mit einem MFI (230/5) von 0,5 bis 1000 g/10min,
   oder
   eines teilkristallinen Propylen/Ethylen-, Propylen/1-Olefin- oder Propylen/Ethylen/1-Olefin-ter-Blockcopolymers mit $C_4$-$C_8$-1-Olefinen mit einem Ethylen- oder/und 1-Olefin-Anteil von 2 bis 30 Gew.-% und mit einem MFI (230/5) von 0,5 bis 1000 g/10 min,

oder

eines teilkristallinen statistischen Propylen/Ethylen-, Propylen/1-Olefin- oder Propylen/Ethylen/1-Olefin-ter-Copolymers mit einem Ethylen- oder/und 1-Olefin-Anteil von 0,5 bis 30 Gew.-% und einem MFI (230/5) von 0,5 bis 1000 g/10 min,

0 bis 30 Gewichtsteilen

eines thermoplastischen Ethylen/Propylen- oder/und Ethylen/Propylen/Dien-Kautschuksmit einem Ethylen-Gehalt > 45 Gew.-% und einer Mooney-Viskosität ML (1 + 8) bei 127°C von 20 bis 70,

0 bis 10 Gewichtsteilen

eines unverzweigten Polyethylens mit einer Dichte von 0,94 bis 0,965 g/cm$^3$ und einem Kristallinitäts-grad von 60 bis 80 %, und

5 bis 60 Gewichtsteilen

eines Tonminerals mit einem $SiO_2$-Gehalt von 55 bis 80 Gew.-% und einem $Al_2O_3$-Gehalt von 10 bis 30 Gew.-% und einer Korngröße top cut (mindestens 95 %) < 20 $\mu$m.

2.  Verwendung der Polypropylen-Formmasse nach Anspruch 1 zur Herstellung von Formteilen für Automobile.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-2 735 027 (MENTEDISON)<br>* Seite 5, Absatz 3 - Seite 6, Absatz 1 *<br>--- | 1-2 | C08K3/34<br>C08L23/10 |
| Y | DE-A-2 026 394 (ENGLISH CLAYS LOVERING POCHIN& CO)<br>* Seite 2, Absatz 3 -Absatz 6 *<br>* Seite 3, letzter Absatz - Seite 4, Absatz 2 *<br>--- | 1-2 | |
| A | DATABASE WPIL<br>Derwent Publications Ltd., London, GB;<br>AN 84-272383<br>& JP-A-59 166 544 (CALP) 19. September 1984<br>* Zusammenfassung *<br>--- | 1-2 | |
| A | DATABASE WPIL<br>Derwent Publications Ltd., London, GB;<br>AN 82-05810J<br>& JP-A-57 177 038 (MITSUI) 30. Oktober 1982<br>* Zusammenfassung *<br>--- | 1-2 | RECHERCHIERTE SACHGEBIETE (Int. Cl.5) |
| A | GB-A-2 228 477 (MIZUSAWA)<br>* Seite 12, Zeile 18 - Zeile 34 *<br>* Tabelle 5 *<br>--- | 1 | C08K<br>C08L |
| A | GB-A-1 017 959 (BAYER)<br>* Seite 1, Spalte 1, Zeile 13 - Zeile 32 *<br>* Seite 2, Spalte 2, Zeile 115 - Zeile 130 *<br><br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 20 OKTOBER 1992 | SCHMIDT H.R. |